# EUROPEAN PATENT APPLICATION

(11) **EP 2 334 088 A1**
(43) Date of publication of application: **15.06.2011**
(21) Application number: 09179019.6
(22) Date of filing: 14.12.2009
(51) Int. Cl.: H04N 13/00

(54) **Generating a 3D video signal**

(71) Applicant: Koninklijke Philips Electronics N.V., 5621 BA Eindhoven (NL)
(72) Inventor: Newton, Philip, S., 5600 AE, Eindhoven (NL); de Haan, Wiebe, 5600 AE, Eindhoven (NL); Bolio, Dennis, D., R., J., 5600 AE, Eindhoven (NL)
(74) Representative: Damen, Daniel Martijn

(57) **Abstract**

The invention relates to a method for generating a three-dimensional (3D) video signal to enable simultaneous display of a 3D primary video signal and a secondary video signal on a 3D display, the 3D primary video signal comprising a base video signal and a subsidiary signal enabling 3D display, and the method comprising the steps of providing as the secondary video signal a two-dimension (2D) secondary video signal, and formatting the base video signal, the subsidiary signal and the 2D secondary video signal to generate the 3D video signal.

## Description

### FIELD OF THE INVENTION

The invention relates to generating a three-dimensional (3D) video signal to enable simultaneous display of a primary video signal and a secondary video signal on a 3D display. The invention further relates to processing said 3D video signal.

It has become desirable to standardize a 3D video signal format enabling the playback of 3D video by consumers since movies are increasingly being recorded in 3D and 3D displays are appearing on the market. Hence, various efforts for standardization are taking place. For example, the Blu-ray Disc Association has announced plans for incorporating 3D into the Blu-ray disc format, and MPEG is developing standards for the encoding, decoding, transmission, and storage of 3D video signals.

Furthermore, for many years now, Picture-in-Picture (PiP) functionality has been incorporated in display and playback devices for enabling the simultaneous display or playback of two or more video signals. For example, a television may be able to receive two video signals simultaneously, and provide, using the PiP functionality, an inset window displaying one of the video signals, the window thereby covering a part of an otherwise full-screen window displaying the other video signal. Similarly, a set-top box may receive two video signals simultaneously, and generate an output video signal comprising the inset window for display on a television.

The PiP functionality allows television viewers to simultaneously watch two or more video signals. For example, a viewer may like to monitor the end of a commercial break on one channel while temporarily watching another channel. The contents of both video signals may also be related to each other. For example, the full-screen window may display a first camera perspective of a soccer match, and the inset window may display a second camera perspective of the same soccer match. In fact, the invention specifically relates to simultaneously shown video signals being related to each other.

Next to the inset window provided by PiP, various other spatial compositions are known for enabling the simultaneous display of two or more video signals. For example, two video signals may be displayed side-by-side, otherwise known as Picture-and-Picture (PAP or P&P), or four video signals may be displayed in a quad picture mode. For facilitating the explanation of the invention, though, any spatial composition for displaying two or more related video signals simultaneously will be henceforth referred to as PiP.

The PiP functionality can also be provided by a suitable video stream, such as e.g. the video stream contained on a Blu-ray disc. A producer of a movie may use the PiP functionality to provide an inset window containing video commentary of e.g. a director or actor. A viewer may enable this video commentary to learn about background information of the movie being displayed in the full-screen window. As such, the movie and the commentary, i.e. a primary and a secondary video signal, are contained in the video stream stored on the disc.

### BACKGROUND OF THE INVENTION

It is desirable to provide a 3D video signal having PiP functionality, particularly since consumers have become accustomed to two-dimensional (2D) video signals having PiP functionality.

A known method for providing PiP functionality in said 3D video signal is to, next to a 3D primary video signal, additionally provide a 3D secondary video signal. More specifically, WO 2008/038205 discloses a system that receives 3D image information and secondary 3D image information for simultaneous presentation on a 3D display, the image information being received from e.g. an optical record carrier or the internet. The 3D video signal being received therefore provides PiP functionality by providing the 3D secondary video signal next to the 3D primary video signal.

### SUMMARY OF THE INVENTION

A problem of the above 3D video signal is that its bit rate is relatively high. As a consequence of the relatively high bit rate of the 3D video signal, the bandwidth required for transmitting the 3D video signal is also relatively high. Similarly, the storage capacity required for storing the 3D video signal is relatively high. Lastly, encoding and decoding the 3D video signal typically requires relatively many computing resources.

It is an object of the invention to provide a 3D video signal having a lower bit rate, the 3D video signal enabling simultaneous display of a primary video signal and a secondary video signal on a 3D display.

In a first aspect of the invention, this object is realized in that a method is provided for generating a 3D video signal to enable simultaneous display of a 3D primary video signal and a secondary video signal on a 3D display, the 3D primary video signal comprising a base video signal and a subsidiary signal enabling 3D display, and the method comprising the steps of providing as the secondary video signal a 2D secondary video signal, and formatting the base video signal, the subsidiary signal and the 2D secondary video signal to generate the 3D video signal.

In a further aspect of the invention, a method is provided for processing a 3D video signal to enable simultaneous display of a 3D primary video signal and a secondary video signal on a 3D display, the 3D primary video signal comprising a base video signal and a subsidiary signal enabling 3D display, the 3D video signal comprising as the secondary video signal a 2D secondary video signal, the 3D video signal comprising, in a formatted form, the base video signal, the subsidiary signal and the 2D secondary video signal, and the method comprising the steps of de-formatting from the 3D video signal the base video signal, the subsidiary signal and the 2D secondary video signal, and merging the 2D secondary video signal with the base video signal and the subsidiary signal to provide a 3D display signal for display of the 2D secondary video signal at a display depth on the 3D display.

In a further aspect of the invention, a computer program product is provided comprising instructions for causing a processor system to perform either of said methods.

In a further aspect of the invention, a 3D video signal is provided for enabling simultaneous display of a 3D primary video signal and a secondary video signal on a 3D display, the 3D primary video signal comprising a base video signal and a subsidiary signal enabling 3D display, the 3D video signal comprising as the secondary video signal a 2D secondary video signal, and the 3D video signal comprising, in a formatted form, the base video signal, the subsidiary signal and the 2D secondary video signal.

In a further aspect of the invention, an information carrier is provided comprising said 3D video signal.

In a further aspect of the invention, a signal generating device is provided for generating a 3D video signal to enable simultaneous display of a 3D primary video signal and a secondary video signal on a 3D display, the 3D primary video signal comprising a base video signal and a subsidiary signal enabling 3D display, and the device comprising a providing means for providing as the secondary video signal a 2D secondary video signal, and a formatting unit for formatting the base video signal, the subsidiary signal and the 2D secondary video signal to generate the 3D video signal.

In a further aspect of the invention, a signal processing device is provided for processing a 3D video signal to enable simultaneous display of a 3D primary video signal and a secondary video signal on a 3D display, the 3D primary video signal comprising a base video signal and a subsidiary signal enabling 3D display, the 3D video signal comprising as the secondary video signal a 2D secondary video signal, the 3D video signal comprising, in a formatted form, the base video signal, the subsidiary signal and the 2D secondary video signal, and the device comprising a de-formatting unit for de-formatting from the 3D video signal the base video signal, the subsidiary signal and the 2D secondary video signal, and a merging unit for merging the 2D secondary video signal with the base video signal and the subsidiary signal to provide a 3D display signal for display of the 2D secondary video signal at a display depth on the 3D display.

The measures according to the invention provide a 3D video signal that contains, next to a primary video signal, a secondary video signal for providing the PiP functionality of the 3D video signal. In the 3D video signal, the primary video signal is a 3D primary video signal, yet the secondary video signal is specifically provided as a 2D secondary video signal. The 3D primary video signal comprises a base video signal and a subsidiary signal, with the subsidiary signal containing the required information for enabling 3D display. For example, the 3D primary video signal may be a left+right (stereo) video signal, the base video signal being the left video signal and the subsidiary signal being the right video signal. The 3D primary video signal may also be a 2D+depth video signal, the base video signal being the 2D video signal and the subsidiary signal being the depth signal. The base video signal, the subsidiary signal and the 2D secondary video signal are then converted into a stream format to generate the 3D video signal.

Advantageously, the 3D video signal comprising the 2D secondary video signal has a lower bit rate than a 3D video signal comprising a 3D secondary video signal. The reason for the lower bit rate is that a 3D secondary video signal comprises, next to a secondary base video signal, an additional secondary subsidiary signal, the secondary subsidiary signal enabling 3D display. By providing a 2D secondary video signal instead of a 3D secondary video signal, the secondary subsidiary signal is omitted and therefore the bit rate of the secondary video signal is lowered.

The invention is also based on the recognition that providing a 3D secondary video signal has surprisingly limited effect on the viewer's appreciation of the PiP functionality over providing a 2D secondary video signal. The reason for the limited effect of a 3D secondary video signal on the viewer's appreciation of PiP is two-fold: first, the viewer is most of the time focused on the 3D primary video signal and not on the secondary video signal, and secondly, the secondary video signal is typically displayed in a window that is small relative to the full display screen, making depth of a 3D secondary video relatively hard to notice. Hence, in practice, the viewer will hardly notice that the secondary video signal is provided in 2D instead of 3D.

Therefore, the measures have the effect that the generated 3D video signal has a lower bit rate than a 3D video signal comprising a 3D secondary video signal. As a consequence, less bandwidth is required for transmitting the 3D video signal, and less storage capacity is required for storing the 3D video signal. Lastly, encoding and decoding the 3D video signal typically requires less computing resources. Advantageously, the cost of a device that encodes, decodes, transmits or stores the 3D video signal is lower.

The following embodiments of the invention achieve the effect that the 3D video signal is a single video stream, therefore requiring only a single transmission medium and carrier, while at the same time providing both PiP and 3D functionality.

In an embodiment of the invention, a method is provided for generating a 3D video signal, wherein the 3D video signal is a video stream in a multiplexed form, the method further comprising the steps of formatting the base video signal to generate a base video stream, formatting the subsidiary signal to generate a subsidiary stream, and multiplexing the base video stream with the subsidiary stream to generate the video stream and including the 2D secondary video signal in the video stream.

In an embodiment of the invention, a 3D video signal is provided wherein the 3D video signal is a video stream in a multiplexed form, the video stream comprising the 2D secondary video signal and comprising a base video stream multiplexed with a subsidiary stream, the base video stream comprising, in a formatted form, the base video signal, and the subsidiary stream comprising, in a formatted form, the subsidiary signal.

In an embodiment of the invention, a signal processing device is provided for processing a 3D video signal, wherein the 3D video signal is a video stream in a multiplexed form, the video stream comprising the 2D secondary video signal and comprising a base video stream multiplexed with a subsidiary stream, the base video stream comprising, in a formatted form, the base video signal, the subsidiary stream comprising, in a formatted form, the subsidiary signal, and the device further comprising a de-multiplexing unit for de-multiplexing from the video stream the base video stream and the subsidiary stream, and the de-formatting unit being arranged for de-formatting the base video signal from the base video stream, de-formatting the subsidiary signal from the subsidiary stream and extracting the 2D secondary video signal from the video stream.

The above measures according to the invention provide as the 3D video signal a video stream in a multiplexed form. The video stream is in a multiplexed form as it comprises the base video stream multiplexed with the subsidiary stream. The base video stream comprises the base video signal converted into a stream format, and the subsidiary stream comprises the subsidiary signal converted into a stream format. The base video stream and the subsidiary stream are obtained from the video stream by de-multiplexing said streams. The base video signal is obtained by reversing the conversion of the base video signal into a stream format, the subsidiary signal is obtained by reversing the conversion of the subsidiary signal into a stream format, and the 2D secondary video signal is obtained by extracting it from the video stream.

The measures have the effect that the 3D video signal is a single video stream. A single video stream requires only a single communication medium for transfer, only a single recording unit for recording, etc, while at the same time providing both PiP and 3D functionality. The video stream itself comprises two individual streams, namely the base video stream and the subsidiary stream, and the 3D primary video signal is separated over the two streams by separately formatting the base video signal and the subsidiary signal. Advantageously, by separating the 3D primary video signal over the two streams, the bit rate of each individual stream is lower than the bit rate of the single video stream comprising the 3D primary video signal.

De-formatting a stream is computational intensive, particularly if the de-formatting comprises de-compression. In contrast, de-multiplexing is less computational intensive. Hence, de-formatting the single video stream is more computational intensive than de-multiplexing the single video stream and only de-formatting either of the two streams.

As a consequence, a de-formatting unit used for de-formatting either of the two streams can suffice with a lower computational performance than a de-formatting unit used for de-formatting the single video stream. Similarly, a de-formatting unit with only modest computational performance cannot de-format the single video stream, but can de-format either of the two individual streams. In particular, a signal processing device may not be equipped with a de-formatting unit of sufficiently high computational performance to de-format the single video stream, but comprise, for being compliant with certain standards, two de-formatting units of modest performance. The device is therefore capable of de-formatting the two separate streams, even though is not capable of de-formatting the single video stream.

Furthermore, a signal processing device equipped with only one de-formatting unit of modest computational performance is able de-format the base video stream to provide the base video signal. The base video signal is, in view of backward compatibility of the 3D primary video signal, usually a 2D primary video signal. Therefore, the signal processing device is able to de-format the 2D primary video signal. If the 3D primary video signal is formatted in a single video stream, such a device cannot provide a primary video signal at all.

The 3D video signal therefore enables backward compatibility with signal processing device having only one de-formatting unit for 2D video signals, e.g. an older 2D signal processing device, while at the same time providing the functionality of PiP and 3D on signal processing devices having multiple de-formatting units. Advantageously, a consumer having a 2D signal processing device may enjoy at least the 2D functionality of the 3D video signal. Additionally, a producer may reduce the cost of producing and distributing video content with PiP and 3D functionality by providing the video content in the 3D video signal format without having to worry that consumers with 2D signal processing devices are not able to playback the video content at all.

The following embodiments of the invention achieve the effect that the 3D video signal enables a signal processing device having only one de-formatting unit to provide the base video signal together with PiP functionality.

In an embodiment of the invention, a method is provided for generating a 3D video signal, wherein the step of formatting the base video signal comprises multiplexing the base video signal with the 2D secondary video signal for including the 2D secondary video signal in the base video stream.

In an embodiment of the invention, a signal processing device is provided for processing a 3D video signal, wherein the base video stream comprises, in a formatted form, the base video signal multiplexed with the 2D secondary video signal, and the de-formatting unit is further arranged for de-multiplexing from the base video stream the base video signal and the 2D secondary video signal.

The above measures according to the invention provide a base video stream additionally comprising the 2D secondary video signal. The base video stream is generated by multiplexing and converting the base video signal and the 2D secondary video signal into a stream format. Hence, the base video signal and the 2D secondary video signal are obtained from the base video stream by reversing the conversion into a stream format and by de-multiplexing said signals.

The measures have the effect that the 2D secondary video signal is contained specifically in the base video stream. Hence, a de-formatting unit that de-formats the base video stream obtains both the base video signal and the 2D secondary video signal. In particular, a signal processing device having only one de-formatting unit can de-format the base video stream to provide a 2D primary video signal and a 2D secondary video signal and hence provide PiP functionality. The 3D video signal therefore enables a signal processing device having only one de-formatting unit to provide the 2D primary video signal together with PiP functionality.

The following embodiments of the invention achieve the effect that the bit rate of the base video stream is not increased as a consequence of providing PiP functionality in the 3D video signal.

In an embodiment of the invention, a method is provided for generating a 3D video signal, wherein the step of formatting the subsidiary signal comprises multiplexing the subsidiary signal with the 2D secondary video signal for including the 2D secondary video signal in the subsidiary stream.

In an embodiment of the invention, a signal processing device is provided for processing a 3D video signal, wherein the subsidiary stream comprises, in a formatted form, the subsidiary signal multiplexed with the 2D secondary video signal, and the de-formatting unit is further arranged for de-multiplexing from the subsidiary stream the subsidiary signal and the 2D secondary video signal.

The above measures according to the invention provide a subsidiary stream additionally comprising the 2D secondary video signal. The subsidiary stream is generated by multiplexing and converting the subsidiary signal and the 2D secondary video signal into a stream format. Hence, the subsidiary signal and the 2D secondary video signal are obtained from the subsidiary stream by reversing the conversion into a stream format and by de-multiplexing said signals.

The measures have the effect that the 2D secondary video signal is contained specifically in the subsidiary stream, and that the base video stream therefore is the same as the base video stream of a 3D video signal not having PiP functionality. Hence, the bit rate of the base video stream is not increased as a consequence of providing PiP functionality in the 3D video signal. Rather, the bit rate of the subsidiary stream is increased. For reasons of compatibility with standards as well as existing de-formatting units, the bit-rate of a stream is limited to a certain maximum.

The bit rate of a formatted subsidiary signal is typically lower than that of a formatted base video signal. For example, if the 3D video signal is a 2D+depth video signal, the depth information comprises one depth value for each pixel, whereas the base video signal comprises three color values for each pixel, e.g. the R, G and B. Hence, by including the 2D secondary video signal in the subsidiary stream rather than in the base video stream, the maximum of the bit rate of both streams is lowered, i.e. the bit-rate of the overall video stream is more equally distributed between the base video stream and the subsidiary stream. Advantageously, a better picture quality of the base video signal is obtained by allocating the full available bit rate specified in a standard to only the base video signal.

The following embodiments of the invention achieve the effect that the base video stream and the subsidiary stream have the same bit rate as the respective streams of a 3D video signal not having PiP functionality.

In an embodiment of the invention, a method is provided for generating a 3D video signal, the method further comprising the step of formatting the 2D secondary video signal to generate a 2D secondary video stream, and the step of multiplexing comprising multiplexing the 2D secondary video stream with the base video stream and with the subsidiary stream for said including the 2D secondary video signal in the video stream.

In an embodiment of the invention, a signal processing device is provided for processing a 3D video signal, wherein the video stream comprises a 2D secondary video stream multiplexed with the base video stream and with the subsidiary stream, the 2D secondary video stream comprising, in a formatted form, the 2D secondary video signal, the de-multiplexing unit being further arranged for de-multiplexing the 2D secondary video stream, and the de-formatting unit being further arranged for de-formatting the 2D secondary video signal from the 2D secondary video stream.

The above measures according to the invention provide a 2D secondary video stream comprising the 2D secondary video signal. The 2D secondary video stream is generated by converting the 2D secondary video signal into a stream format, and is included in the video stream by multiplexing the 2D secondary video stream with the base video stream and the subsidiary stream. Hence, the 2D secondary video signal is obtained from the video stream by de-multiplexing said streams, and by reversing the conversion of the 2D secondary video signal into a stream format.

The measures have the effect that the 2D secondary video signal is contained in a separate 2D secondary video stream and neither in the base video stream nor the subsidiary stream. The base video stream and the subsidiary stream therefore have the same bit rate as the respective streams of a 3D video signal not having PiP functionality. Hence, the 3D video signal is compatible with a signal processing device with two de-formatting units only having computing resources for de-formatting a 3D video signal not having PiP functionality. Although such a device cannot provide PiP functionality, the 3D primary video signal can still be de-formatted. Yet, the same 3D video signal provides PiP functionality on a device that has an additional de-formatting unit for the 2D secondary video stream. Furthermore, a user of such a signal processing device with two de-formatting units can chose if 3D functionality is preferred or if PiP functionality is preferred. In the first case, the base video stream and the subsidiary stream are de-formatted, and in the latter case, the base video stream and the 2D secondary video stream are de-formatted. Hence, the 3D video signal advantageously offers the user the possibility to choose between 3D functionality and PiP functionality according to personal preference.

In an embodiment of the invention, a 3D video signal is provided wherein the 3D video signal comprises a primary signal component and a secondary signal component, the primary signal component comprising the base video signal formatted for individually transmitting the primary signal component, and the secondary signal component comprising the 2D secondary video signal formatted for individually transmitting the secondary signal component.

The above measures according to the invention provide a 3D video signal comprising a primary signal component for providing a 2D primary video signal and a secondary signal component for providing a 2D secondary video signal. Said video signals are formatted to enable the individual transmission of both signal components. Hence, the measures have the effect that the two signal components of the 3D video signal can be transmitted or received via separate transmission channels or stored on separate information carriers. The lower bit rate of the 3D video signal is therefore realized in the secondary signal component of the 3D video signal comprising the 2D secondary video signal.

Advantageously, a consumer can conveniently obtain the PiP functionality of a primary video signal already in the consumer's possession by downloading said secondary signal component from the internet, and a producer of the primary video signal is able to earn additional income by making available said secondary signal component for purchase by the consumer.

The following embodiments of the invention achieve the effect that the display depth of the 2D secondary video signal in the 3D display signal can be controlled using an offset value included in the 3D video signal.

In an embodiment of the invention, a method is provided for generating a 3D video signal, the method further comprising the step of including an offset value in the 3D video signal, the offset value being indicative of a display depth of the 2D secondary video signal on the 3D display.

In an embodiment of the invention, a signal processing device is provided for processing a 3D video signal, wherein the 3D video signal further comprises an offset value indicating the display depth of the 2D secondary video signal on the 3D display, and wherein the merging unit is further arranged for merging, in dependence of the offset value, the 2D secondary video signal with the base video signal and the subsidiary signal.

The above measures according to the invention provide an offset value being included in the 3D video signal, and the merging unit using the offset value for placing the 2D secondary video signal in a 3D display signal at a display depth indicated by the offset value. Hence, the measures have the effect that the display depth of the 2D secondary video signal in the 3D display signal can be controlled using the offset value. The producer of the 3D video signal can therefore pre-determine a display depth of the 2D secondary video signal and include said display depth in the 3D video signal by means of the offset value.

Advantageously, the offset value enables providing a display depth of the 2D secondary video signal that is clearly separated from the display depth of the 3D primary video signal for preventing any confusion or interpretation difficulties of the viewer.

### BRIEF DESCRIPTION OF THE DRAWINGS

In the drawings,
Fig. 1 shows a method for generating a 3D video signal;
Fig. 2 shows a method for generating a video stream;
Fig. 3 shows a method for generating a video stream comprising a 2D secondary video stream;
Fig. 4 shows a method for generating a 3D video signal comprising an offset value;
Fig. 5 shows a method for processing a 3D video signal;
Fig. 6 shows a 3D video signal;
Fig. 7 shows a video stream;
Fig. 8 shows a video stream comprising a 2D secondary video stream;
Fig. 9 shows an information carrier comprising a 3D video signal;
Fig. 10 shows a signal generating device for generating a 3D video signal;
Fig. 11 shows a signal processing device for processing a 3D video signal;
Fig. 12 shows a signal processing device for processing a video stream;
Fig. 13 shows a signal processing device for processing a video stream comprising a 2D secondary video stream;
Fig. 14 shows a 3D video signal comprising an offset value;
Fig. 15 shows a signal processing device arranged for using an offset value;
Fig. 16 shows a signal processing device comprising a 3D display, a broadcast receiver, an internet receiver and a reader.

### DETAILED DESCRIPTION OF EMBODIMENTS

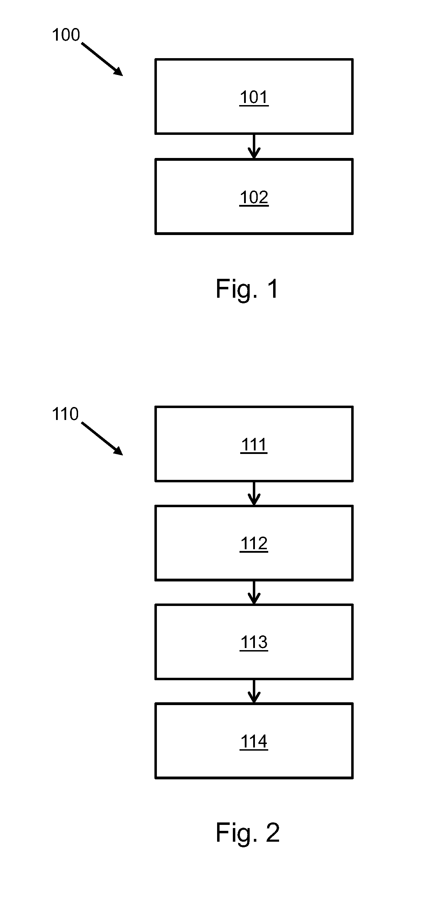

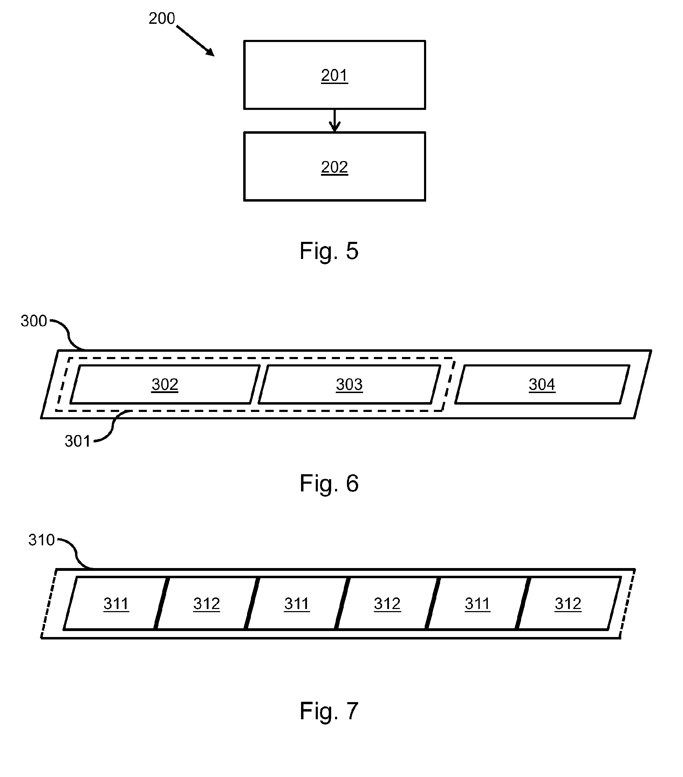

Fig. 1 is a flow chart of a method 100 for generating a 3D video signal 300, as illustrated in Fig. 6, to enable simultaneous display of a 3D primary video signal 301 and a secondary video signal on a 3D display. The 3D primary video signal 301 may be any currently known 3D video signal, as well as a future developed 3D video signal. The currently known 3D video signals, however, have in common that they comprises a base video signal 302 and a subsidiary signal 303, the subsidiary signal enabling 3D display.

For example, the 3D primary video 301 signal may be a left+right (stereo) video signal, the base video signal 302 being the left video signal and the subsidiary signal 303 being the right video signal, or vice versa. The 3D primary video signal 301 may also be a 2D+depth video signal, the base video signal 302 being the 2D video signal and the subsidiary signal 303 being the depth signal. The subsidiary signal 303 may also contain more information than only depth, as e.g. described in 'Declipse 2: Multilayer Image-and-Depth with Transparency Made Practical' by B. Barenbrug, Proceedings of Stereoscopic Displays and Applications XX (2009), hereby incorporated by reference. Also, the 3D primary video signal 301 may be a multi-view+depth video signal comprising multiple base video signals and corresponding multiple subsidiary signals enabling 3D display.

The 3D display may be any currently known or future developed 3D display suitable for showing a 3D video signal. For example, the 3D display may be a stereoscopic 3D television or an auto-stereoscopic lenticular-based multi-view 3D display.

The method 100 comprises providing as the secondary video signal a 2D secondary video signal 304 in a "Providing the 2D secondary video signal" step 101. In this step, the secondary video signal is specifically provided as a 2D secondary video signal 304. The step may comprise directly receiving or obtaining the 2D secondary video signal 304, or may comprise first receiving or obtaining a 3D secondary video signal. In the latter case, the step additionally comprises converting the 3D secondary video signal to the 2D secondary video signal 304. If the 3D secondary video signal comprises a 2D secondary base video signal and a secondary subsidiary signal, the conversion may involve omitting the secondary subsidiary signal and using the 2D secondary base video signal as 2D secondary video signal 304. However, a more complex conversion of 3D to 2D is equally possible.

The method 100 further comprises formatting the base video signal 302, the subsidiary signal 303 and the 2D secondary video signal 304 to generate the 3D video signal 300 in a "Generating the 3D video signal" step 102. In this step, the base video signal 302, the subsidiary signal 303 and the 2D secondary video signal 304 are converted into a structured format to thereby generate the 3D video signal 300. The resulting 3D video signal 300 is typically located on a single information carrier or transmitted via a single transmission medium, but may also be separated into signal components, the signal components being located on different information carriers or transmitted via different transmission media.

Fig. 2 is a flowchart of a method 110 for generating a 3D video signal, wherein the 3D video signal is a video stream 310 in a multiplexed form. The video stream 310 is a series of information units, e.g. bits or bytes, the information units representing video data in this particular case. If the video stream 310 is transmitted or received via a transmission medium, the series is a series in time. However, the video stream 310 may also be stored on an information carrier, in which case the video stream 310 is a series of information units in place. The series in place may be strictly sequential in place, i.e. each information unit has only a previous and a next information unit as physical neighbors. More typically, however, is that the information carrier has an underlying structure, e.g. a file system, which obscures the serial nature of the video stream 310. In this case, the serial nature of the video stream 310 shows in the steps of the storing and retrieving of the video stream 310, during which the video stream 310 is series information units in time.

The method 110 comprises formatting the base video signal 302 to generate a base video stream 311 in a "Generating the base video stream" step 111, and formatting the subsidiary signal 303 to generate a subsidiary stream 312 in a "Generating the subsidiary stream" step 112. Formatting a signal involves converting the signal into a structured format to generate a stream. In effect, the stream becomes a container for the signal from which the stream was generated. A stream is serial in nature, but a signal not necessarily. Rather, video signal are typically 2D or 3D in nature. Hence, formatting a 2D video signal may involve converting the 2D video signal into a video stream by scanning through the 2D video signal pixel by pixel to generate a series of pixels in time.

In this respect, it should be noted that the adjective '2D' in describing a video stream is only intended as clarification that the signal from which the stream is generated is specifically a 2D video signal. Hence, it does not indicate the stream being '2D' in nature.

Formatting a signal to generate a stream may additionally comprise adding auxiliary information in the stream, e.g. metadata, header information, error correction information, synchronization information, etc. As such, a stream may be created that complies to an agreed standard, e.g. a MPEG elementary stream or a MPEG transport stream. The formatting may also comprise compressing said signal to generate a video stream that has a lower bit rate. For this purpose, a wide range of data compression techniques may be used, e.g. as standardized by the MPEG-2 or H264 standards, to convert the signal in a stream comprising fewer information units than otherwise would have been required. As a specific example, the subsidiary signal 303 may be formatted in an elementary stream for including said stream on a Blu-ray disc.

The method 110 further comprises multiplexing the base video stream 311 with the subsidiary stream 312 to generate the video stream 310 in a "Multiplexing the streams" step 113. Multiplexing is the step of combining multiple signals into one single signal, or, in this case, combining multiple streams into one single stream. A common form of multiplexing is the time-division multiplexing, in which the multiple streams are interleaved in time to generate the single video stream. Hence, by multiplexing the base video stream 311 with the subsidiary stream 312, a single video stream 310 is created that comprises both streams in a multiplexed form.

Lastly, the method 110 comprises including the 2D secondary video signal 304 in the video stream 310 in a "Including the 2D secondary video signal" step 114. The 2D secondary video signal 304 can be included in the video stream 310 in various ways. For example, the 2D secondary video signal 304 may be formatted to generate a 2D secondary video stream 313, and said stream may be additionally multiplexed to generate the video stream 315 or included at the beginning or the end of the video stream 310. Also, the 2D secondary video signal 304 may be included in the video stream 310 by multiplexing the base video signal 302 with the 2D secondary video signal 304, and formatting the resulting signal to generate the base video stream 311. Similarly, the 2D secondary video signal 304 may be included in the video stream 310 by multiplexing the subsidiary signal 303 with the 2D secondary video signal 304, and formatting the resulting signal to generate the subsidiary stream 312. Also, the 2D secondary video signal 304 may be directly multiplexed into the base video stream 311 or the subsidiary stream 312.

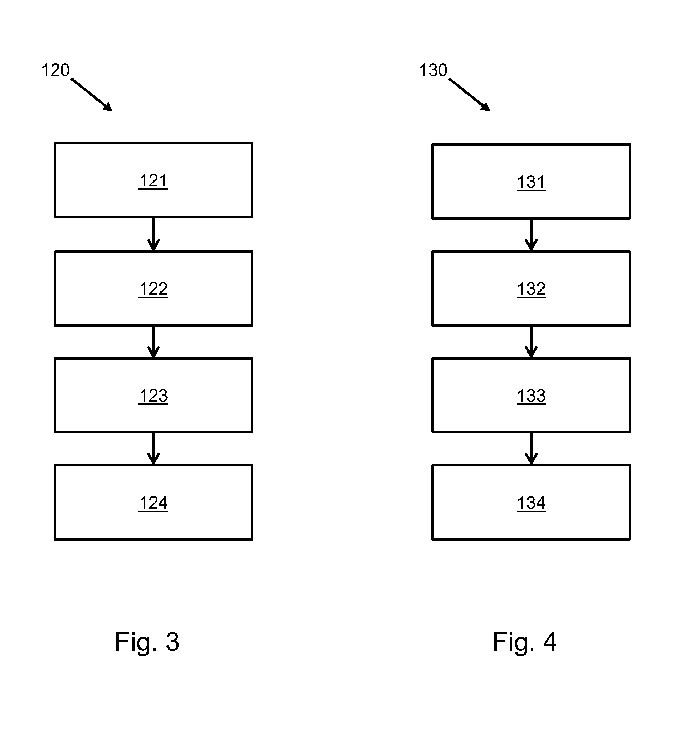

Fig. 3 is a flowchart of a method 120 for generating a video stream 315 comprising a 2D secondary video stream 313. The method 120 comprises the steps of formatting the base video signal 302 to generate the base video stream 311 in the "Generating the base video stream" step 111, and formatting the subsidiary signal 303 to generate the subsidiary stream 312 in the "Generating the subsidiary stream" step 112. Furthermore, the method 120 comprises formatting the 2D secondary video signal 304 to generate a 2D secondary video stream 313 in a "Generating the 2D secondary video stream" step 123. Furthermore, the "Multiplexing the streams" step 124 comprises multiplexing the 2D secondary video stream 313 with the base video stream 311 and with the subsidiary stream 312, thereby including the 2D secondary video signal 304 in the video stream 315.

Fig. 4 is a flowchart of a method 130 for generating a 3D video signal 500 comprising an offset value 501. The first step 131 of the method 130 is identical to the step 101 "Providing the 2D secondary video signal" step of Fig. 1, and the second step 132 is identical to the step 102 "Generating the 3D video signal" of Fig. 1. The method 130 further comprises including an offset value 501 in the 3D video signal 500 in a "Including the offset value" step 134, the offset value 501 being indicative of a display depth of the 2D secondary video signal 304 on the 3D display.

To further explain the step 134 of including said offset value 501, one needs to understand that a 3D display essentially displays information at a certain display depth. The display depth is mostly provided by a 3D video signal. This may be indirectly by means of e.g. the disparity between the left and the right video signal of a left+right (stereo) video signal, or directly by means of e.g. the depth signal of a 2D+depth video signal. A playback device or a 3D display may then further modify the provided depth to generate the display depth, e.g. by further amplifying or reducing the provided depth.

A 3D display typically has a 'default' display depth at which no depth illusion is being created. This is the case if e.g. both views of a stereoscopic display provide identical information. This default display depth is typically interpreted by the viewer as the information being displayed at the depth of the display itself, i.e. not "protruding outside" (i.e. provided with a depth perceived as nearer to the viewer than the display plane) or "carving inside" the 3D display (i.e. provided with a depth perceived as further remote from the viewer than the display plane).

For a number of reasons, such as preventing any confusion or interpretation difficulties of the viewer, it may be desirable to control the display depth of the 2D secondary video signal 304 on the 3D display. For that purpose, the method 130 therefore comprises including 134 the offset value 501 in the 3D video signal 500 to indicate and thus allow control of a display depth of the 2D secondary video signal 304 on the 3D display.

The method 130 further comprises the 2D secondary video signal 304 being derived from a 3D secondary video signal, and determining the offset value 501 in dependence of depth of the 3D secondary video signal in a "Determining the offset value" step 133. If the 2D secondary video signal 304 is derived from a 3D secondary video signal, the depth of the 3D secondary video signal may be used to indicate the display depth of the 2D secondary video signal 304 on the 3D display. For example, if the depth of the 3D secondary video signal indicates an on-average strong protrusion outside of a 3D display, a similar effect may be achieved by having the entire 2D secondary video signal 304 protrude strongly outside of the 3D display. Also, scene recognition may be used to achieve a similar effect; if the 3D secondary video signal contains a flat landscape, the display depth and thus the offset value 501 may be chosen such that 2D secondary video signal 304 is located as far away from the viewer as possible, i.e. carving inside of the 3D display.

Fig. 5 is a flowchart of a method 200 for processing a 3D video signal 300 to enable simultaneous display of a 3D primary video signal 301 and a secondary video signal on a 3D display, the 3D video signal 300 comprising as the secondary video signal a 2D secondary video signal 304. The method 200 comprises de-formatting from the 3D video signal 300 the base video signal 302, the subsidiary signal 303 and the 2D secondary video signal 304 in a "De-formatting" step 201. The de-formatting essentially involves reversing the step of formatting, i.e. reversing the conversion of a signal to generate a stream. In essence, the signal is extracted from the container that the stream constitutes. De-formatting may additionally comprise using or removing auxiliary information from the signal in the stream, e.g. metadata, header information, error correction information, synchronization information, etc. The de-formatting may also comprise de-compressing said signal from the stream. For this purpose, a wide range of data de-compression techniques may be used, e.g. as standardized by the MPEG-2 or H264 standards.

The method 200 further comprises merging the 2D secondary video signal 304 with the base video signal 302 and the subsidiary signal 303 in a "Merging" step 202 to provide a 3D display signal for display of the 2D secondary video signal 304 at a display depth on the 3D display. A 3D display essentially requires a single 3D display signal as input. The merging provides the 3D display signal by merging the 3D primary video signal 301 with the 2D secondary video signal 304.

The merging may occur in various ways, largely depending on the format of the 3D primary video signal. For example, if the 3D primary video signal 301 is a left+right (stereo) video signal, a possible way of merging is to merge the 2D primary video signal 304 in both the base video signal 302 and the subsidiary signal 303 by replacing pixel data of the base video signal 302 and the subsidiary signal 303 by pixel data of the 2D primary video signal 304.

If the 3D primary video signal 301 is a 2D+depth video signal, a possible way of merging is to merge the 2D secondary video signal 304 in the base video signal 302, and to set the subsidiary signal 303 to a pre-determined depth value at the locations where the 2D secondary video signal 304 has been merged into the base video signal 302. Similarly, if the 3D primary video signal 301 is a multi-view+depth video signal, the above process has to be repeated for each pair of base video signal 302 and subsidiary signal 303 in order to merge the 2D secondary video signal 304 into each view.

Various spatial compositions of the PiP functionality are possible, e.g. side-by-side or an inlet window of certain size and position. The inlet window may even have any arbitrary shape by using luma-keying, i.e. the process of replacing pixels in an video signal that fall into a particular range of brightness, as known from the field of video compositing. Hence, the required spatial composition of the 3D primary video signal 301 and 2D secondary video signal 304 need to be taken into account during the merging step. One option is that the merging step actually arranges said spatial composition, e.g. by re-sizing, cropping, or moving either or both video signals. Another option is that the spatial composition has already been arranged, i.e. both video signals have already been re-sized, cropped, etc. In this case, the step of merging may be limited to replacing pixels in the 3D primary video signal 301 with pixels of the 2D secondary video signal 304.

It may be more visually appealing to create a 'blend' of the 3D primary video signal 301 and 2D secondary video signal 304. For this purpose, both video signals may be blended with each other, e.g. using alpha compositing as known from the field of video compositing. Alpha compositing in essences determines a weighted sum of the pixel values of both video signals to create an appearance of partial transparency for the PiP functionality.

When blending the 3D primary video signal 301 and 2D secondary video signal 304, preferably the level of depth of the respective video signals is taken into account. In this respect the not yet published International Application IB2009/054160, entitled "Depth signal improvement in the presence of alpha", hereby incorporated by reference, describes how in case of a image+depth signal such blending can be accomplished.

Fig. 6 shows a 3D video signal 300 for enabling simultaneous display of a 3D primary video signal 301 and a secondary video signal on a 3D display. The 3D primary video signal comprises a base video signal 302 and a subsidiary signal 303 enabling 3D display, and the 3D video signal 300 comprises as the secondary video signal a 2D secondary video signal 304. As a result, the 3D video signal 300 comprises, in a formatted form, the base video signal 302, the subsidiary signal 303 and the 2D secondary video signal 304.

The 3D video signal may be transmitted or received via a single or via multiple transmission channels, or stored on a single or multiple information carriers. In a method for transmitting the 3D video signal 300, the 3D video signal is provided with the secondary video signal of the 3D video signal being a 2D secondary video signal 304, and the 3D video signal is transmitted via a transmission channel.

Fig. 7 shows a video stream 310 comprising a base video stream 311 multiplexed with a subsidiary stream 312, the base video stream 311 comprising, in a formatted form, the base video signal 302, and the subsidiary stream 312 comprising, in a formatted form, the subsidiary signal 303. The video stream 310 also comprises the 2D secondary video signal 304 being included in either the base video stream 311 or the secondary stream 312.

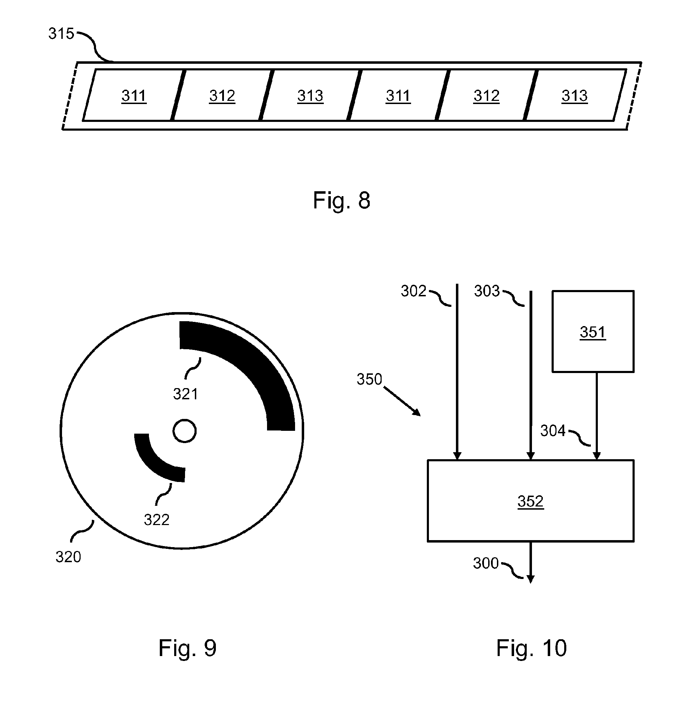

Fig. 8 shows a video stream 315 being similar to the video stream 310 of Fig. 7. However, the video stream 315 additionally comprises a 2D secondary video stream 313 multiplexed with the base video stream 311 and with the subsidiary stream 312. In contrast with the video stream 310 of Fig. 7, the 2D secondary video signal 304 is included in a separate 2D secondary video stream 313 instead of being included in either the base video stream 311 or the secondary stream 312.

Fig. 9 shows an information carrier 320 comprising a 3D video signal 300, the 3D video signal 300 being by way of example separated into a primary signal component 321 and a secondary signal component 322. The information carrier 320 may be any suitable information carrier, such as Blu-ray disc, DVD disc, hard disk, etc., and may be non-recordable or recordable. In the former case, the information carrier 320 is manufactured to contain the 3D video signal 300 by converting the 3D video signal 300 into physical marks on the information carrier during manufacturing. In the latter case, the 3D video signal 300 is typically recorded on to the information carrier 320 by a consumer or a content creator, the step of recording involving converting the 3D video signal 300 into physical marks on the information carrier 320. The 3D video signal may also be a single video stream 310 comprising the base video stream 311 multiplexed with the subsidiary stream 312. The logical multiplexing of said streams results in a physical multiplexing on the information carrier 320. Advantageously, the physical multiplexing enables a reading unit of a playback device to read both streams without requiring physical relocation of the reading unit.

The primary signal component 321 shown in Fig. 9 comprises the base video signal 302, and the secondary signal component 322 comprises the 2D secondary video signal 304. Both the base video signal 302 and the 2D secondary video signal 304 are formatted for enabling individual transmission of both signal components. As a consequence, both components may also be stored on two different locations of the information carrier 320. The subsidiary signal 303 may be included in the primary signal component 321 or the secondary signal component 322, but may also be included in a third signal component. In this case, the subsidiary signal 303 is formatted for enabling individual transmission of the third signal component. Similarly, the primary signal component 321 may comprise the base video signal 302 while the secondary signal component 322 comprises the subsidiary signal 303. In this case, the 2D secondary video signal 304 may be included in either signal component.

The formatting to enable individual storage or transmission of both signal components is sometimes also known as enabling non-multiplexed, i.e. so-termed out-of mux, storage or transmission. Upon playback and hence display of the 3D video signal 300, a playback device may then, for buffering purposes, first read the secondary signal component 322 from the information carrier 320 and store said signal component in local storage, e.g. non-volatile memory. Such buffering may be required if the playback device is unable to simultaneously read the two signal components from the information carrier 320.

Subsequently, the playback device may read the primary signal component 321 from the information carrier 320 simultaneous with reading the secondary signal component 322 from the local storage in order to provide synchronous playback of the 3D primary video signal 301 and the 2D secondary video signal 304 on a 3D display. Alternatively, either of the two components may also be e.g. directly streamed from the internet during playback of the 3D video signal 300, or first downloaded from the internet and buffered in the local storage.

In a practical example, the 3D video signal 300 enables a consumer to buy a Blu-ray disc containing the primary signal component 321, the primary signal component 321 comprising as the base video signal 302 a 2D video signal of a movie. The user may then download from the internet, possibly after an online payment, the secondary signal component 322 comprising the subsidiary signal 303 and the 2D secondary video signal 304. As such, the downloaded secondary signal component 322 enables 3D and PiP functionality of the movie contained on the Blu-ray disc in 2D.

Fig. 10 is a block diagram of a signal generating device 350 for generating a 3D video signal 300. The device comprises a providing means 351 for providing as the secondary video signal a 2D secondary video signal 304. In a first variant, the providing means 351 may be a receiver for receiving the 2D secondary video signal 304 from an external source. However, the providing means 351 may also be a receiver for receiving a 3D secondary video signal, and may be further arranged for converting the 3D secondary video signal into the 2D secondary video signal 304. Furthermore, the device comprises a formatting unit 352 for formatting the base video signal 302, the subsidiary signal 303 and the 2D secondary video signal 304 to generate the 3D video signal 300.

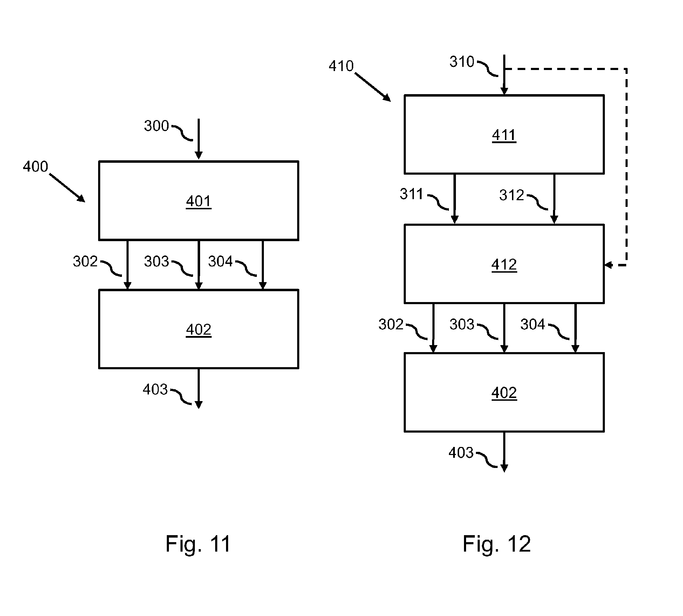

Fig. 11 is a block diagram of a signal processing device 400 for processing a 3D video signal 300 to generate a 3D display signal 403. The device comprises a de-formatting unit 401 for de-formatting from the 3D video signal 300 the base video signal 302, the subsidiary signal 303 and the 2D secondary video signal 304. The device further comprises a merging unit 402 for merging the 2D secondary video signal 304 with the base video signal 302 and the subsidiary signal 303 to provide a 3D display signal 403 for display of the 2D secondary video signal 304 at a display depth on the 3D display. For that purpose, the 3D display signal 403 may be directly sent to the 3D display, or may first be further processed by an additional signal processing device, e.g. for video enhancement or format conversion, before being sent to the 3D display.

Fig. 12 is a block diagram of a signal processing device 410 for processing a video stream 310 to generate a 3D display signal 403. The device comprises a de-multiplexing unit 411 for de-multiplexing from the video stream 310 the base video stream 311 and the subsidiary stream 312. The device further comprises a de-formatting unit 412 that is arranged for de-formatting the base video signal 302 from the base video stream 311, de-formatting the subsidiary signal 303 from the subsidiary stream 312 and extracting the 2D secondary video signal 304 from the video stream 310.

The extracting is essentially the inverse process as the step of "Including the 2D secondary video signal" of the method 110 depicted in Fig. 2. Hence, depending on the way that the 2D secondary video signal 304 is included in the video stream 310, various options exist for extracting said signal. For example, if neither the base video stream 311 nor the subsidiary stream 312 comprises the 2D secondary video signal 304, the de-formatting unit 412 can be arranged for extracting the 2D secondary video signal directly from the video stream. This is indicated in Fig. 12 by the dashed line.

It is also possible that the base video stream 311 comprises, in a formatted form, the base video signal 302 multiplexed with the 2D secondary video signal 304. In this case, the de-formatting unit 412 is further arranged for de-multiplexing from the base video stream 311 the base video signal 302 and the 2D secondary video signal 304. Another possibility is that the subsidiary stream 312 comprises, in a formatted form, the subsidiary signal 303 multiplexed with the 2D secondary video signal 304. In this case, the de-formatting unit 412 is further arranged for de-multiplexing from the subsidiary stream 312 the subsidiary signal 303 and the 2D secondary video signal 304. Lastly, the device comprises the same merging unit 402 as depicted in Fig. 11.

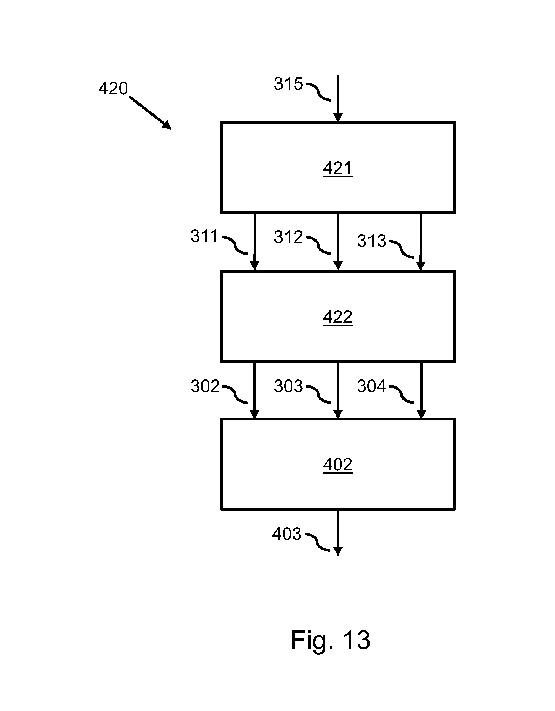

Fig. 13 is a block diagram of a signal processing device 420 for processing a video stream 315 comprising a 2D secondary video stream 313 to generate a 3D display signal 403. The video stream 315 comprises a 2D secondary video stream 313 multiplexed with the base video stream 311 and with the subsidiary stream 312. The device therefore comprises a de-multiplexing unit 421 that is similar to the de-multiplexing unit 411 shown in Fig. 12, but is further arranged for de-multiplexing the 2D secondary video stream 313 from the video stream 315. Furthermore, the de-formatting unit 422 is similar to the de-formatting unit 412 shown in Fig. 12, but is further arranged for de-formatting the 2D secondary video signal 304 from the 2D secondary video stream 313. Lastly, the device comprises the same merging unit 402 as depicted in Fig. 11.

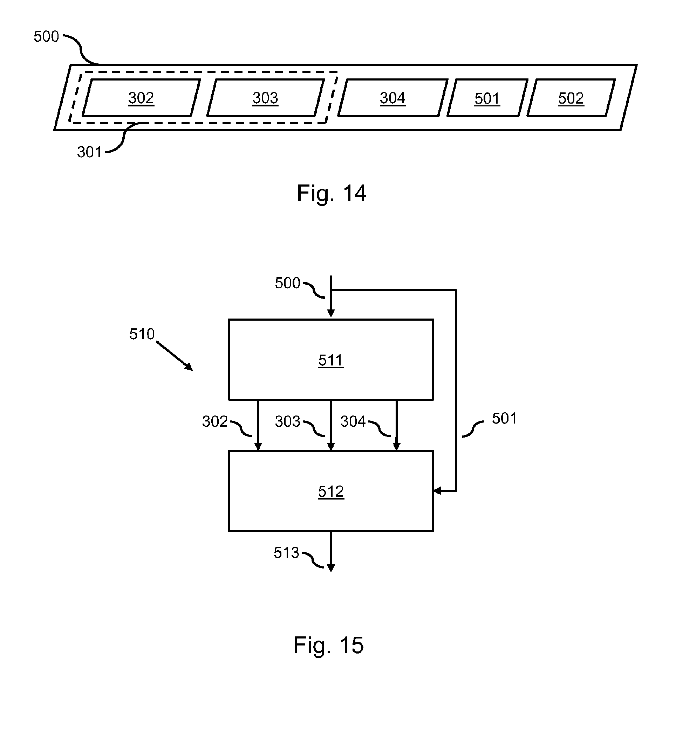

Fig. 14 shows a 3D video signal 500 comprising an offset value 501. The 3D video signal 500 is similar to the 3D video signal 300 shown in Fig. 6, but additionally comprises the offset value 501 being indicative of a display depth of the 2D secondary video signal 304 on the 3D display. There are various ways that the offset value 501 can be included in the 3D video signal 500, as illustrated by the following example of the 3D video signal 500 being included on a Blu-ray disc. Here, the base video signal 302, the subsidiary signal 303, the 2D secondary video signal 304 and the offset value 501 are formatted such that they conform to a version of the Blu-ray disc specification.
In this example, the 2D secondary video signal is formatted in a so-termed PiP elementary stream. The Blu-ray disc further contains a secondary video stream stored in the same data structure as it would have been on a 2D Blu-ray disc containing PiP functionality, i.e. it is listed as a subpath in the playitem that also has the PiP elementary stream listed in its so-termed 'STN_table'. In this context, a playitem is in essence a play-list, a subpath in the playitem is in essence a reference to additional components, and the 'STN_table' is a table that lists all the elementary streams that can be selected during the presentation of the playitem. The 2D secondary video signal 304 may further be formatted to be out-of-mux, stored on local storage and presented synchronously or asynchronously with the 3D primary video signal 301. Of course, combinations of these options are possible as well.

The offset value 501 may be included on said Blu-ray disc in various ways. For example, the offset value 501 may be included in metadata for the secondary video stream, i.e. the secondary video metadata. For this, the secondary video metadata may define new subpath types that indicate that the subpath is an elementary stream containing an in-mux or out-of-mux (a)synchronous PiP stream. Furthermore, offset metadata comprising the offset value 501 may be embedded in a reserved field in a sub-playitem.

The offset value 501 may also be included in metadata for the PiP elementary stream, i.e. the PiP metadata. The PiP metadata defines where to locate the PiP in the frame. These location parameters could then be extended as is shown in the table below with a 'PiP_offsef value identifier and a 'PiP_offset_direction' that indicates whether the offset should be applied by moving the PiP forwards, i.e. protruding outside the 3D display, or moving the PiP backwards, i.e. carving inside the 3D display.

**Table 1 - PiP offset parameters**

| **Syntax** | | **No. Of bits** |
|---|---|---|
| **Is PiP offset** | | 1 |
| If (IS_PiP _offset==1b){ | | |
| | **PiP_ offset_ direction** | 1 |
| | **PiP_offset_value** | 6 |
| } | | |

The offset metadata for the PiP may also be added as extension data to the playlist in a newly defined table that lists further 2D video streams that have an associated offset parameter value. Furthermore, the offset data may be frame-accurate, i.e. an offset value 501 is provided for a specific frame of the 2D secondary video signal 304. In such a case, a 3D video signal may comprise multiple offset values 501, e.g. formatted in an offset value stream.

In a preferred alternative to the above, the offset value 501 is provided by extending the STN_table of the playlist used by a Blu-ray playback device in 3D mode by the following information:

**Table 2 - STN_table syntax for 3D mode**

| **Syntax** | **No. Of bits** | **Mnemonic** |
|---|---|---|
| for (secondary_video_stream_id=0; secondary_video_stream_id < number_of_secondary_video_stream_entries; secondary_video_stream_id++) { | | |
| **PiP_offset_sequence_id_ref** | 8 | uimsbf |
| If (Secondary_Video_Size(PSR14)==OxF) { | | |
| **PiP_Full_Screen_offset_sequence_id_ref** | 8 | uimsbf |
| } | | |

In the above table, the 'PiP_offset_sequence_id_ref' field specifies an identifier to reference a stream of offset values. Preferably, this stream of offset values is carried as a table in MVC SEI messages, one per GOP. In this context, MVC stands for MultiView Coded, SEI stands for Supplemental Enhancement Information and GOP stands for Group-of-Pictures. The interpretation of said offset values further depends on the so-termed 'plane_offset_value' and 'plane_offset_direction' . Furthermore, the 'PiP _Full_Screen_offset_sequence_id_ref field specifies an identifier to reference a stream of offset values for when the PiP scaling factor is set to full screen.

Fig. 15 is a block diagram of a signal processing device 510 arranged for using an offset value 501 included in the 3D video signal 500. The device comprises a de-formatting unit 511 being similar to the de-formatting unit 401 of Fig. 11, with the only difference being that the de-formatting unit 511 accepts the 3D video signal 500 of Fig. 14 as input rather than the 3D video signal 300 of Fig. 6. The device further comprises a merging unit 512 being similar to the merging unit 402 shown in Fig. 11, with the difference being that the merging unit 512 is further arranged for merging, in dependence of the offset value 501, the 2D secondary video signal 304 with the base video signal 302 and the subsidiary signal 303.

By merging said signals in dependence of the offset value 501, the control of the display depth of the 2D secondary video signal 304 on the 3D display is made possible. For example, if the 3D primary video signal 301 is a left+right (stereo) video signal, the display depth of the 2D secondary video signal 304 may be controlled by merging the 2D secondary video signal 304 shifted by half the offset value to the left into the base video signal 302, the base video signal being the left video signal. Furthermore, the secondary video signal 304 shifted by half the offset value to the right is merged into the subsidiary signal 303, the subsidiary signal being the right video signal. The above example of merging is particularly advantageous in terms of computational efficiency, as incorporating the offset value 501 in the merging unit 412 can be realized by manipulation of memory pointers.

If the 3D primary video signal 301 is a 2D+depth video signal, a possible way of controlling the display depth of the 2D secondary video signal 304 on the 3D display is by setting the subsidiary signal 303 to a depth value as indicated by the offset value 501 at the location where the 2D secondary video signal 304 is merged into the base video signal 302. In the above example, the base video signal is the 2D video signal, and the subsidiary signal is the depth signal. Similarly, if the 3D primary video signal 301 is a multi-view+depth video signal, the 2D secondary video signal 304 is merged into each of the base video signals 302 while being shifted in independence of the offset value 501 and the angle of the view, i.e. for the extreme left views the 2D secondary video 304 has a relatively large shift to the right, whereas for the extreme right views it has a relatively large shift to the left. Furthermore, each of the subsidiary signals 303 has to be set to a depth value as indicated by the offset value 501 at the location where the 2D secondary video signal 304 is merged into the base video signal 302 corresponding to said subsidiary signal 303.

The 3D video signal 500 shown in Fig. 14 further comprises a graphics signal 502. The graphics signal 502 may be included to provide visual information to the viewer. Particularly if the graphics signal is a 2D graphics signal, the offset value 501 may be provided in the 3D video signal 500 with the intent of indicating the display depth of the graphics signal 502. Such an offset value may therefore be also used as indication of display depth of the 2D secondary video signal 304, particularly since it may be visually pleasing to a viewer to display both the graphics signal 502 and the 2D secondary video signal 304 at a similar display depth. In some cases it may also be desirable to clearly distinguish said signals; the offset value 501 of the graphics signal 502 may then be used to determine a clearly differing display depth for the 2D secondary video signal 304.

The 2D secondary video signal 304 may also be provided with metadata intended for display, e.g. subtitles. In this case, the merging unit 512 may be further arranged for further merging the subtitles in dependence of the offset value 501, such that the 2D secondary video signal 304 and the corresponding subtitles are displayed at a similar display depth on the 3D display. Also, it may be that the offset value 501 is not included in the 3D video signal 500, or a viewer might prefer to manually control the display depth. In this case, the signal processing device 510 may additionally be provided with a receiving means for receiving the offset value 501. The receiving means may receive the offset value 501 from a playback control program, or may receive the offset value 501 from the viewer using e.g. a user interface or remote control.

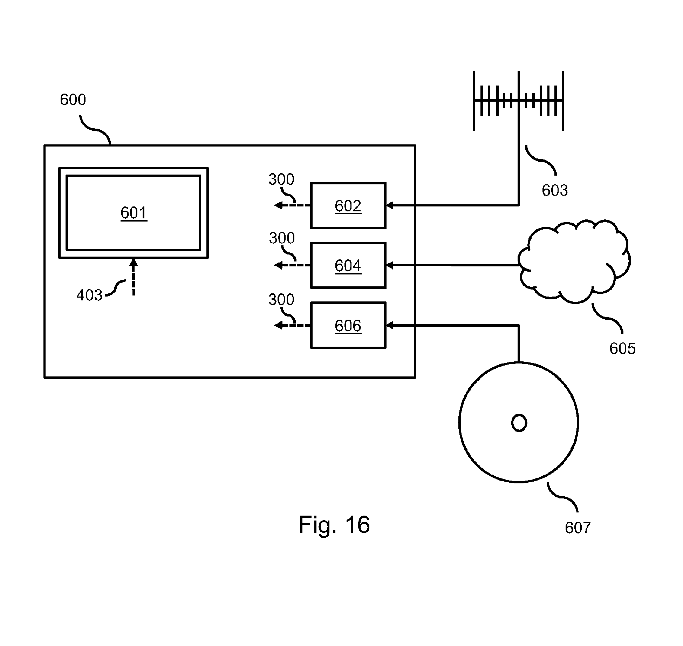

Fig. 16 is a block diagram of a signal processing device 600 comprising any combination of the 3D display 601 for displaying the 3D display signal 403, a broadcast receiver 602 for receiving the 3D video signal 300 from broadcast 603, an internet receiver 604 for receiving the 3D video signal 300 from internet 605 or a reader 606 for reading the 3D video signal 300 from an information carrier 607.

The signal processing device 600 may be e.g. a television, monitor, etc, which may be equipped with any type of 3D or 2D display. For example, the signal processing device 600 may be an auto-stereoscopic 3D television, the 3D display may be a lenticular-based multi-view 3D display, and the device may generate the required 3D display signal 403 for input to the 3D display 501. The signal processing device 600 may also be e.g. Blu-ray player, a Blu-ray recorder, a set-top box, personal computer, harddisk recorder etc, in which case the device is typically not provided with the 3D display 601. Furthermore, the device may be provided with only one or two of the following: the broadcast receiver 602, the internet receiver 604 or the reader 606.

The broadcast receiver 602 may be of any suitable type, e.g. for receiving terrestrial, satellite or cable broadcasts. The internet receiver 604 may also be of any suitable type, and may include modem functionality as required by e.g. ADSL, Ethernet, WLAN, UMTS etc, or be an interface protocol, e.g. TCP/IP. The reader 606 may be of any suitable type for reading an 3D video signal from an information carrier 607, the information carrier 607 being of any suitable type, e.g. Blu-ray, DVD, flash-memory, ROM, RAM etc.

It will be appreciated that the above description for clarity has described embodiments of the invention with reference to different functional units. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

It is noted that when a 3D stereo video signal is scaled to e.g. a quarter of the resolution of the 3D primary video signal, the depth impression that such a scaled 3D stereo video signal provides typically also scales down. This is the result on one hand of the fact that the disparity values; i.e. the apparent displacements between the left and right images of the scaled 3D stereo video signal are proportionally scaled down. However, on the other hand the impact of this scaling is emphasized as depth is inversely proportional to disparity. As a result scaling may have a pronounced effect on the depth impression. Thus it may be particularly advantageous to store a secondary video signal as a 2D secondary video signal when the secondary video signal is available at a resolution lower than that of the 3D primary video signal. The latter holds particularly when the 2D secondary video signal is stored at a quarter of the resolution of the 3D primary video signal or smaller.

The invention can be used with a variety of PiP implementations such as true Picture in Picture wherein at least two, three or more sides of the 2D secondary video signal are adjacent to the 3D primary video signal, but also in relation with Picture and Picture. In combination with an encoded offset, the present invention is particularly advantageous for implementing a Picture in Picture, wherein the 2D secondary video signal is displayed within the 3D primary video signal and has at least two sides of the 2D secondary video signal adjacent to the 3D primary video signal. The latter holds in particularly true when the Picture in Picture is implemented using irregularly shaped boundaries; such as free-hand boundaries. In such applications the offset in the depth direction may help in providing an advantage to situations without offset in that it enables the 2D secondary video signal to be placed at a depth-wise suitable position.

The flexibility of adding an offset enables more flexible depth-wise positioning of the 2D secondary signal in relation to the 3D primary video signal. This flexibility enables e.g. positioning at a technically advantageous locations:
- in front of the 3D primary video; or at least in front of the 3D video directly adjacent (i.e. in (x,y) spatial proximity), thus providing a more natural look; i.e. the 2D secondary occluding the 3D primary video is actually positioned in front of the 3D primary video,
- close to the depth of the focal point in the 3D primary video signal, thus facilitating the viewers to switch from watching the 3D primary video signal to watching the 2D secondary video signal,
- close to the zero disparity plane, thus providing maximum sharpness and/or
- at an esthetically pleasing location, as determined by e.g. the author of the content, and/or the artistic director of the content.

By providing proper offset control any of the above approaches can be combined. Offset control can be provided at different levels of granularity. For example offset control can be provided on a per frame basis; thereby allowing adaptive placement of the 2D secondary video signal, e.g. in order to compensate for dynamics in the 3D primary video signal; such as variations in the depth of the 3D primary video signal. However in this case; temporal continuity is relevant and the amount of variation is preferably kept below a threshold which may be, but need not be, dependent on the 3D primary video signal.

Alternatively, the offset control may be controlled on a higher granularity, such as on a group of pictures basis, in order to provide a more efficient encoding, wherein preferably the granularity corresponds to that of the underlying video compression standard. More alternatively, the offset control may be controlled on an even higher level; such as on a per shot basis; thereby facilitating offset generation during the authoring of the video signals and also providing a more efficient encoding. Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

## Claims

1. A method (100, 110, 120, 130) for generating a 3D video signal (300, 500) to enable simultaneous display of a 3D primary video signal (301) and a secondary video signal on a 3D display (601), the 3D primary video signal comprising a base video signal (302) and a subsidiary signal (303) enabling 3D display, and the method comprising the steps of:
- providing (101, 131) as the secondary video signal a 2D secondary video signal (304);
- formatting (102, 132) the base video signal, the subsidiary signal and the 2D secondary video signal to generate the 3D video signal.

2. A method (110) according to claim 1, wherein the 3D video signal is a video stream (310, 315) in a multiplexed form, the method further comprising the steps of:
- formatting (111, 121) the base video signal (302) to generate a base video stream (311);
- formatting (112, 122) the subsidiary signal (303) to generate a subsidiary stream (312);
- multiplexing (113, 124) the base video stream with the subsidiary stream to generate the video stream;
- including (114) the 2D secondary video signal (304) in the video stream.

3. A method (110) according to claim 2, wherein the step of formatting (111) the base video signal (302) comprises multiplexing the base video signal with the 2D secondary video signal (304) for including the 2D secondary video signal in the base video stream (311).

4. A method (110) according to claim 2, wherein the step of formatting (112) the subsidiary signal (303) comprises multiplexing the subsidiary signal with the 2D secondary video signal (304) for including the 2D secondary video signal in the subsidiary stream (312).

5. A method (120) according to claim 2, the method further comprising the step of formatting (123) the 2D secondary video signal (304) to generate a 2D secondary video stream (313), and the step of multiplexing (124) comprising multiplexing the 2D secondary video stream with the base video stream (311) and with the subsidiary stream (312) for said including the 2D secondary video signal in the video stream (315).

6. A method (130) according to claim 1, the method further comprising the step of including (134) an offset value (501) in the 3D video signal (500), the offset value being indicative of a display depth of the 2D secondary video signal (304) on the 3D display (601).

7. A method (130) according to claim 6, wherein the 2D secondary video signal (304) is derived from a 3D secondary video signal, and the method further comprises the step of determining (133) the offset value (501) in dependence of depth of the 3D secondary video signal.

8. A method (200) for processing a 3D video signal (300) to enable simultaneous display of a 3D primary video signal (301) and a secondary video signal on a 3D display (601), the 3D primary video signal comprising a base video signal (302) and a subsidiary signal (303) enabling 3D display, the 3D video signal comprising as the secondary video signal a 2D secondary video signal (304), the 3D video signal comprising, in a formatted form, the base video signal, the subsidiary signal and the 2D secondary video signal, and the method comprising the steps of:
- de-formatting (201) from the 3D video signal the base video signal, the subsidiary signal and the 2D secondary video signal;
- merging (202) the 2D secondary video signal with the base video signal and the subsidiary signal to provide a 3D display signal (403) for display of the 2D secondary video signal at a display depth on the 3D display.

9. A computer program product comprising instructions for causing a processor system to perform the method of any of the claims 1 to 8.

10. A 3D video signal (300) for enabling simultaneous display of a 3D primary video signal (301) and a secondary video signal on a 3D display (601), the 3D primary video signal comprising a base video signal (302) and a subsidiary signal (303) enabling 3D display, the 3D video signal comprising as the secondary video signal a 2D secondary video signal (304), and the 3D video signal comprising, in a formatted form, the base video signal, the subsidiary signal and the 2D secondary video signal.

11. A 3D video signal according to claim 10, wherein the 3D video signal is a video stream (310) in a multiplexed form, the video stream comprising the 2D secondary video signal (304) and comprising a base video stream (311) multiplexed with a subsidiary stream (312), the base video stream comprising, in a formatted form, the base video signal (302), and the subsidiary stream comprising, in a formatted form, the subsidiary signal (303).

12. A 3D video signal (300) according to claim 10, wherein the 3D video signal comprises a primary signal component (321) and a secondary signal component (322), the primary signal component comprising the base video signal (302) formatted for individually transmitting the primary signal component, and the secondary signal component comprising the 2D secondary video signal (304) formatted for individually transmitting the secondary signal component.

13. An information carrier (320) comprising the 3D video signal of claim 10, 11 or 12.

14. A signal generating device (350) for generating a 3D video signal (300) to enable simultaneous display of a 3D primary video signal (301) and a secondary video signal on a 3D display (601), the 3D primary video signal comprising a base video signal (302) and a subsidiary signal (303) enabling 3D display, and the device comprising:
- a providing means (351) for providing as the secondary video signal a 2D secondary video signal (304);
- a formatting unit (352) for formatting the base video signal, the subsidiary signal and the 2D secondary video signal to generate the 3D video signal.

15. A signal processing device (400, 410, 420, 510, 600) for processing a 3D video signal (300, 500) to enable simultaneous display of a 3D primary video signal (301) and a secondary video signal on a 3D display (601) , the 3D primary video signal comprising a base video signal (302) and a subsidiary signal (303) enabling 3D display, the 3D video signal comprising as the secondary video signal a 2D secondary video signal (304), the 3D video signal comprising, in a formatted form, the base video signal, the subsidiary signal and the 2D secondary video signal, and the device comprising:
- a de-formatting unit (401, 412, 422, 511) for de-formatting from the 3D video signal the base video signal, the subsidiary signal and the 2D secondary video signal;
- a merging unit (402, 512) for merging the 2D secondary video signal with the base video signal and the subsidiary signal to provide a 3D display signal (403, 513) for display of the 2D secondary video signal at a display depth on the 3D display.

16. A signal processing device (410) according to claim 15, wherein the 3D video signal is a video stream (310, 315) in a multiplexed form, the video stream comprising the 2D secondary video signal (304) and comprising a base video stream (311) multiplexed with a subsidiary stream (312), the base video stream comprising, in a formatted form, the base video signal (302), the subsidiary stream comprising, in a formatted form, the subsidiary signal (303), and the device further comprising:
- a de-multiplexing unit (411, 421) for de-multiplexing from the video stream the base video stream and the subsidiary stream;
- and the de-formatting unit (412, 422) being arranged for de-formatting the base video signal from the base video stream, de-formatting the subsidiary signal from the subsidiary stream and extracting the 2D secondary video signal from the video stream.

17. A signal processing device (410) according to claim 16, wherein the base video stream (311) comprises, in a formatted form, the base video signal (302) multiplexed with the 2D secondary video signal (304), and the de-formatting unit (412) is further arranged for de-multiplexing from the base video stream the base video signal and the 2D secondary video signal.

18. A signal processing device (410) according to claim 16, wherein the subsidiary stream (312) comprises, in a formatted form, the subsidiary signal (303) multiplexed with the 2D secondary video signal (304), and the de-formatting unit (412) is further arranged for de-multiplexing from the subsidiary stream the subsidiary signal and the 2D secondary video signal.

19. A signal processing device (420) according to claim 16, wherein the video stream (315) comprises a 2D secondary video stream (313) multiplexed with the base video stream (311) and with the subsidiary stream (312), the 2D secondary video stream comprising, in a formatted form, the 2D secondary video signal (304), the de-multiplexing unit (421) being further arranged for de-multiplexing the 2D secondary video stream, and the de-formatting unit (422) being further arranged for de-formatting the 2D secondary video signal from the 2D secondary video stream.

20. A signal processing device (510) according to claim 15, wherein the 3D video signal (500) further comprises an offset value (501) indicating the display depth of the 2D secondary video signal (304) on the 3D display (601), and wherein the merging unit (512) is further arranged for merging, in dependence of the offset value, the 2D secondary video signal with the base video signal (302) and the subsidiary signal (303).

21. A signal processing device (510) according to claim 20, wherein the 3D video signal (500) further comprises a graphics signal (502), and wherein the offset value (501) indicates a display depth of the graphics signals on the 3D display (601).

22. A signal processing device (600) according to claim 15, the device further comprising at least one of: the 3D display (601) for displaying the 3D display signal (403), a broadcast receiver (602) for receiving the 3D video signal (300) from broadcast (603), an internet receiver (604) for receiving the 3D video signal from internet (605) or a reader (606) for reading the 3D video signal from an information carrier (607).
